# EUROPEAN PATENT SPECIFICATION

(11) **EP 3 330 294 B1**
(45) Date of publication and mention of the grant of the patent: **26.08.2020**
(21) Application number: 16202303.0
(22) Date of filing: 05.12.2016
(51) Int. Cl.: C08C 19/02, C08K 7/14, F16G 1/08, F16G 1/28, C08F 236/12, C08L 15/00

(54) **POWER TRANSMISSION BELT**
KRAFTÜBERTRAGUNGSBAND
COURROIE DE TRANSMISSION DE PUISSANCE

(43) Date of publication of application: 06.06.2018
(73) Proprietor: Dayco Europe S.R.L., 66100 Chieti (IT); ARLANXEO Deutschland GmbH, 41540 Dormagen (DE)
(72) Inventor: CASAGRANDE, Giacomo, 65012 CEPAGATTI (IT); LUCCHESE, Ivonne, 65125 PESCARA (IT); DI MECO, Marco, 65129 PESCARA (IT); DELLI ROCIOLI, Massimiliano, 65015 MONTESILVANO (IT); D'AURIA, Alessandro, 65024 MANOPPELLO SCALO (IT)
(74) Representative: Fiussello, Francesco

(56) References cited:
- EP-A1- 1 157 813
- WO-A1-2015/063162
- WO-A2-02/02657
- US-A1- 2011 237 374

## Description

### TECHNICAL FIELD

This invention relates to a power transmission belt comprising a hydrogenated nitrile-butadiene-PEG acrylate copolymer.

### PRIOR ART

Power transmission belts generally comprise a body made of an elastomeric material, in which a plurality of longitudinal thread-like durable inserts, also known as "cords" are embedded and covered by a covering fabric.

Each component of the power transmission belt contributes to increasing the performance in terms of mechanical resistance, in order to decrease the risk of failure of the power transmission belt, e.g. breaking, and to increase the specific transmissible power.

In particular, the cords contribute to ensuring the required mechanical characteristics of the power transmission belt and make an essential contribution to determining the modulus of the power transmission belt and, in particular, ensure stable performance over time. The cords are generally obtained by winding high-modulus fibres several times.

The cords are normally treated with suitable material to increase the compatibility of the fibres with the body compound that surrounds the cords. The body compound enables connecting the various abovementioned elements and ensures that they contribute to the final performance of the power transmission belt in a synergetic manner.

Body compounds are based on one or more elastomeric materials, preferably enriched with fibres to increase hardness.

The covering fabric of the power transmission belts has the task of increasing abrasion resistance and thus protects the working surface of the power transmission belt from wear due to rubbing between the teeth of the power transmission belt and the pulley with which the power transmission belt interacts. The fabric is normally treated with an adhesive, for example RFL (resorcinol and formaldehyde lattice) to increase the adherence between the body compound and the fabric itself.

In addition, the covering fabric can be fitted to reduce the coefficient of friction of the working surface, reduces the deformability of the teeth and, most of all, reinforces the landing zone, thereby avoiding its breakage.

Finally, the body compound allows connecting the various above said elements and ensuring that the various elements forming the power transmission belt itself synergically contribute to the final performance of the power transmission belt itself.

The body compounds typically contain one or more elastomeric materials possibly enriched with fibres to increase the hardness thereof, as for example US2 699 685 A.

However, in recent engines where performance has increased significantly, power transmission belts, are subjected to high temperatures and these temperatures result in quicker deterioration of the materials forming the various components of the power transmission belts and the power transmission belts must have better mechanical characteristics in order to have a longer mean lifetime.

Typically timing belts are used "dry". By "dry" use, it is intended that the power transmission belts are external to the engine block, are only accidentally in contact with engine oil and are generally not in contact with oil mixed with fuel or other oil pollutants.

Engines have been recently developed for motor vehicles comprising a timing transmission system in which the chains have been replaced by power transmission belts in the same working environment and therefore in continuous contact with oil or in an oil mist.

Systems of this type have been illustrated in patents by the applicant, as in WO2005/080820 for example. In these transmission systems, the power transmission belt is known as an "oil bath belt" or "wet belt" and must be able to satisfy the same longevity requirements of the equivalent chain transmission systems. Within the scope of the present invention, an "oil-bath belt" or "wet belt" is understood to be a power transmission belt used in transmission systems in which it is at least partially immersed in oil at rest and/or during operation, or in transmission systems in which the power transmission belt is continuously in contact with oil or in an oil mist, for example, systems in which oil is supplied to the power transmission belt, for example as a spray via a specially provided nozzle or by shaking due to the action of the power transmission belt and the pulleys.

In particular, in these transmission systems there are no means of separation between the oil lubricating the engine and the transmission system.

Power Transmission belts in oil must therefore resist in continuous contact with high temperature oil during engine operation and not sustain damage, neither at high operating temperatures, nor at very low temperatures.

In particular, it is therefore fundamental for the body compound, which must resist in oil even at high temperatures, to avoid or at least reduce absorption of the oil as well as to maintain a good resistance to abrasion.

Furthermore, in systems in which the power transmission belt is used in direct contact or partially immersed in oil, the engine oil is often contaminated by fuel. In particular, the contamination with fuel that mixes with oil even in high percentages thus diluting the oil itself and attacking the materials forming the power transmission belt, is important for the volume swell of the power transmission belt.

For instance, in some applications oil is mixed and may even comprise up to 30% fuel. The percentage of fuel varies according to the operative conditions of the engine and is higher with a high load and low temperature of the engine.

As is known, fuel also contains many additives which may damage the compounds by which power transmission belts are generally manufactured.

With respect to chain transmissions, belt transmissions generally have lower friction losses and are also less expensive. In addition, a belt transmission is quieter and the stretching of the belt is at most a quarter of that of a chain: this enables controlling the valves of the internal combustion engine much more precisely and also leads to fuel savings.

In general, the basic problem of transmission systems in which the power transmission belt substitutes a chain is to make a power transmission belt that can last at least 240,000 km or 150,000 miles, or rather to ensure that, under normal operating conditions, the power transmission belt never needs to be changed for the entire working life of the vehicle.

To this end, the power transmission belts must have better combination of oil swell and low-temperature characteristics than those currently on the market.

Transmission systems in which the power transmission belt is wet with oil and/or works continuously in oil are generally very similar to those where a chain is used for motion transmission. Materials suitable for the use in the body of power transmission belts, e.g. hydrogenated nitrile rubber (HNBR) or HNBR-terpolymers are well known.

For example, EP-A-2 868 677 discloses a nitrile-group comprising copolymer with 1 to 9 wt.-% monocarboxylic acid monomer units with a Tg of less than -20 °C and an oil swell of less than 20 %. The terpolymers comprise 4.8 wt.-% and 7.7 wt.-% methoxyethyl acrylate, e.g. PEG-1-acrylate or 4.1 wt.-% PEG-5-methacrylate. EP-A-2 868 676 discloses a nitrile-group-comprising copolymer with 1 to 9 wt.% α,β-ethylenically unsaturated carboxylic-group-comprising monomers. Hydrogenated terpolymers with PEG-11-monomers are explicitly disclosed.

However, this solution is disadvantageous as the combination of oil swell and low-temperature characteristics are still not satisfactory for high performance power transmission.

A major further disadvantage of the known power transmission belts it that very good flexibility and oil swelling resistance cannot be adjusted independently of one another. Typically, there are relationships in HNBR between the ACN content, the glass transition temperature and the oil swelling. This means that there is a decrease in oil swelling with rising ACN content, i.e. elevated polarity. At the same time, however, there is a rise in glass transition temperature. Past attempts to achieve a reduction in the glass transition temperature with constant oil swelling or a reduction in oil swelling with constant glass transition temperature through incorporation of various monomers have not been sufficient to provide power transmission belts for high performance power transmission. Therefore, the known HNBR polymers are still unsatisfactory for belt running in contact with oil and particularly at low temperatures.

### DISCLOSURE OF INVENTION

A first object of the present invention is to obtain a power transmission belt, in particular a toothed power transmission belt, with superior characteristics, which is resistant to high temperatures when continually used in contact with oil or even partially immersed in oil, and which, at the same time, is easily manufactured and inexpensive.

A further object of the present invention is to obtain a power transmission belt, in particular a toothed power transmission belt, which has a long service life and which therefore has excellent characteristics regarding high temperature resistance, oil swell and low-temperature characteristics.

In accordance with the present invention, these objects are achieved by a power transmission belt according to claim 1. According to the present invention, moreover envisaged is a use as specified in Claim 13.

### BRIEF DESCRIPTION OF DRAWINGS

For a better understanding of the present invention, it will now be described with reference to the attached figure, in which:
- Figure 1 is a side view of a portion of toothed power transmission belt according to the present invention;
- Figure 2 a rig for a flexibility test of a power transmission belt according to the present invention;

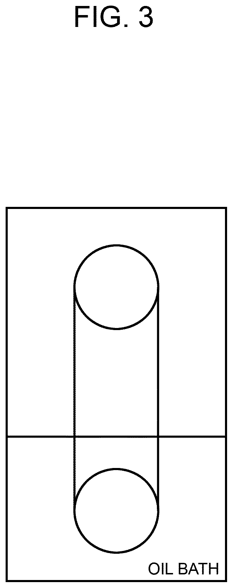

- Figure 3 a rig for an oil swelling test of a power transmission belt according to the present invention;
- Figure 4 a graph showing the result of a flexibility test according to the present invention; and
- Figure 5 a graph showing the result of a swelling in oil test according to the present invention.

### DESCRIPTION

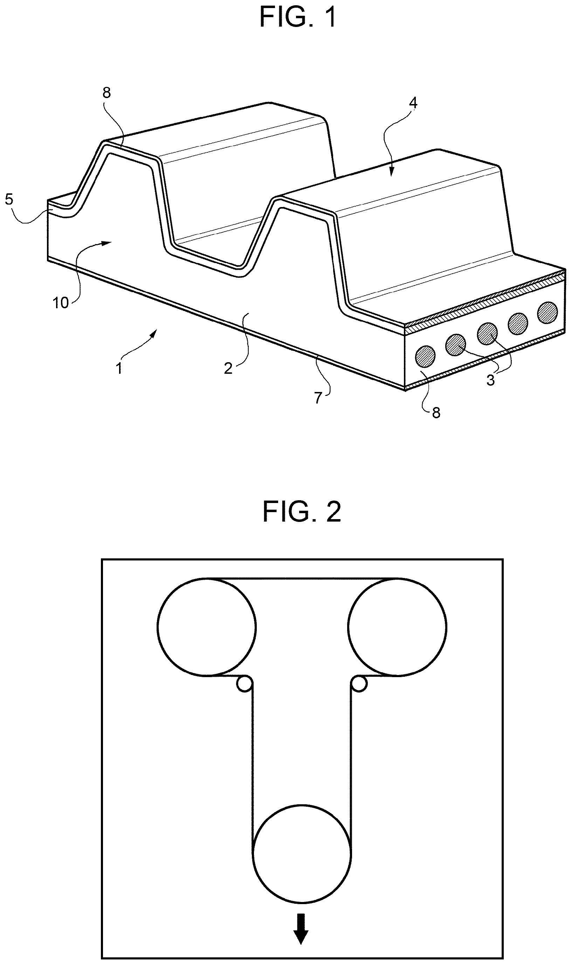

Figure 1 shows a power transmission belt, indicated as a whole by reference numeral 1. The power transmission belt 1 comprises a body 2 made of elastomeric material comprising a hydrogenated nitrile-butadiene-PEG acrylate copolymer in which is a plurality of longitudinal filiform resistant inserts 3 are embedded. In a preferred alternative, the body 2 has a toothing 4, which is covered by a covering fabric 8.

The power transmission belt also comprises a back 7 opposite to the working surface 5.

Hereinafter, by the expression power transmission belt is intended not only a toothed belt but also all kind of known power transmission belts as V-belts, poly-V belts, trapezoidal belts, flat belts.

Hereinafter, by the expression "the elastomeric material is basically constituted" it is meant that the elastomeric material can comprise small percentages of other polymers or copolymers, which can be added to the elastomeric material without varying the chemical-physical characteristics of the mixture and hence without departing from the scope of the present invention. Hereinafter, it is understood that "additive for elastomeric material" means some kind of material that is added to the elastomeric material to change its chemical and physical characteristics.

Use "in oil" or "in an oil mist" means that the power transmission belt is used partially immersed in an oil bath or is in direct contact with oil, generally the power transmission belt in use is within the engine block, for instance as a replacement of chain or gear systems.

Use "in dry conditions" means that the power transmission belts are outside the engine block and are only accidentally in contact with the engine oil and are not generally in contact with fuel-mixed oil.

Use "in fuel-mixed oil" means that the power transmission belt is used in a mixture of oil with percentages even over 30%.

The power transmission belt comprises a hydrogenated nitrile-butadiene-PEG acrylate copolymer containing
a) 25% to 38% by weight, preferably 27% to 37% by weight and more preferably 29% to 36% by weight of at least one α,β-ethylenically unsaturated nitrile unit,
b) 40% to 60% by weight, preferably 42% to 58% by weight and more preferably 44% to 59% by weight of at least one conjugated diene unit and
c) 10% to 25% by weight, preferably 11% to 22% by weight and more preferably 12% to 20% by weight of at least one PEG acrylate unit derived from a PEG acrylate of the general formula (I) 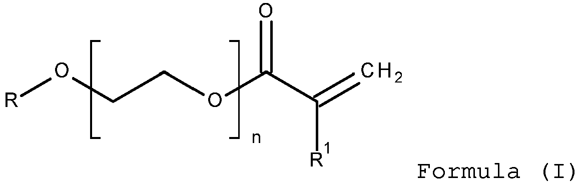 where
   R is hydrogen or branched or unbranched C1-C20-alkyl, preferably methyl, ethyl, butyl or ethylhexyl,
   n is 1 to 8, preferably 2 to 8, more preferably 2 to 5 and most preferably 3 and
   R1 is hydrogen or CH3-,
   where the hydrogenated nitrile-butadiene-PEG acrylate copolymer, if n is 1, does not contain any further copolymerizable monomer unit having a free carboxylic acid group.

Preferably the above elastomer is used within the body 2, but it can be used also in any other portion of the power transmission belt as for example in the fabric treatment composition, in the compound forming the teeth, in a further compound forming only the back of the power transmission belt and not the full body. Preferably the body or also any further elastomeric mixture within the power transmission belt is made of a compound comprising one or more elastomeric materials as the main elastomer and numerous additives.

The "main elastomer" is intended as being present in the compound that constitutes the body for more than 50% by weight, calculated on the total weight of all the elastomers in the compound and therefore excluding all other non-elastomeric components of the power transmission belt.

Preferably the invention elastomer is the main elastomer.

In an embodiment of the invention, at least some of the conjugated diene units have been hydrogenated. Preferably, the level of hydrogenation is 50% or more, more preferably 90% or more, most preferably 99% or more.

It should be noted that the scope of the invention includes any and all possible combinations of the components, ranges of values and/or process parameters mentioned above and cited hereinafter, in general terms or within areas of preference.

The term "nitrile-butadiene-PEG acrylate copolymer" in the context of this invention concerns a copolymer containing at least one α,β-ethylenically unsaturated nitrile monomer unit, at least one conjugated diene monomer unit and at least one PEG acrylate unit derived from a PEG acrylate of the general formula (I) .

The term copolymer encompasses polymers having more than one monomer unit. In one embodiment of the invention, the copolymer is derived preferably, for example, from the three monomer types (a), (b) and (c) described, and is therefore a terpolymer. The term "copolymer" likewise encompasses, for example, additionally quaterpolymers, derived from the three monomer types (a), (b) and (c) described and a further monomer unit (d).

### α,β-Ethylenically unsaturated nitrile

The α,β-ethylenically unsaturated nitrile used, which forms the α,β-ethylenically unsaturated nitrile units (a), may be any known α,β-ethylenically unsaturated nitrile. Preference is given to (C3-C5)-α,β-ethylenically unsaturated nitriles such as acrylonitrile, α-haloacrylnitrile, for example α-chloroacrylnitrile and α-bromoacrylnitrile, α-alkylacrylonitrile, for example methacrylonitrile, ethacrylonitrile or mixtures of two or more α,β-ethylenically unsaturated nitriles. Particular preference is given to acrylonitrile, methacrylonitrile, ethacrylonitrile or mixtures thereof. Very particular preference is given to acrylonitrile. The amount of α,β-ethylenically unsaturated nitrile units (a) is typically in the range from 25% to 38% by weight, preferably 27% to 37% by weight, more preferably from 29% to 36% by weight, based on the total amount of 100% by weight of all the monomer units. The best preferred range is 29% to 33% by weight.

### Conjugated diene

The conjugated diene, which forms the conjugated diene unit (b), may be of any type, especially conjugated C4-C12 dienes. Particular preference is given to 1,3-butadiene, isoprene, 2,3-dimethylbutadiene, 1,3-pentadiene (piperylene) or mixtures thereof. Especially preferred are 1,3-butadiene and isoprene or mixtures thereof. Very particular preference is given to 1,3-butadiene.

The amount of conjugated diene is typically in the range from 40% to 60% by weight, preferably 42% to 58% by weight and more preferably 44% to 59% by weight, based on the total amount of 100% by weight of all the monomer units.

### PEG acrylate

In addition to the α,β-ethylenically unsaturated nitrile units and the conjugated diene units, the hydrogenated nitrile-butadiene-PEG acrylate copolymer contains, as a third unit, at least one PEG acrylate unit derived from PEG acrylates of the general formula (I) 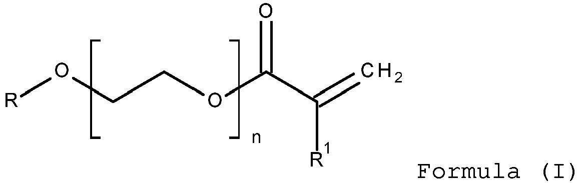 where
R is hydrogen or branched or unbranched C1-C20-alkyl, preferably methyl, ethyl, butyl or ethylhexyl,
n is 1 to 8, preferably 2 to 8, more preferably 2 to 5 and most preferably 3 and
R1 is hydrogen or CH3-.

The term "(meth)acrylate" in the context of this invention represents "acrylate" and "methacrylate". When the R1 radical in the general formula (I) is CH3-, the molecule is a methacrylate. The term "polyethylene glycol" or the abbreviation "PEG" in the context of this invention represents both monoethylene glycol sections having one repeat ethylene glycol unit (PEG-1; n = 1) and polyethylene glycol sections having 2 to 8 repeat ethylene glycol units (PEG-2 to PEG-8; n = 2 to 8).

The term "PEG acrylate" is also abbreviated to PEG-X-(M)A where "X" represents the number of repeat ethylene glycol units, "MA" represents methacrylate and "A" represents acrylate.

Acrylate units derived from PEG acrylates of the general formula (I) are referred to in the context of this invention as "PEG acrylate unit".

Preferred PEG acrylate units are derived from the PEG acrylates of the following formulae no. 1 to no. 10, where n is 1, 2, 3, 4, 5, 6, 7 or 8, preferably 2, 3, 4, 5, 6, 7 or 8, more preferably 3, 4, 5, 6, 7 or 8 and most preferably 3:

| | |
|---|---|
| Polyethylene glycol acrylate (Formula no. 1) | 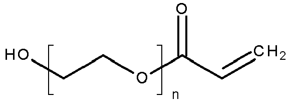 |
| Polyethylene glycol methacrylate | 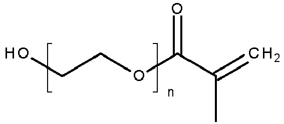 |
| (Formula no. 2) | |
| Methoxy polyethylene glycol acrylate (Formula no. 3) | 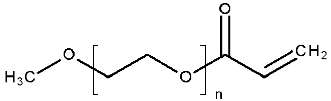 |
| Methoxy polyethylene glycol methacrylate (Formula no. 4) | 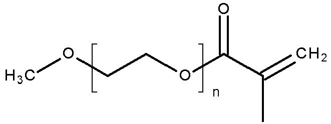 |
| Ethoxy polyethylene glycol acrylate | 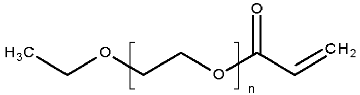 |
| (Formula no. 5) | |
| Ethoxy polyethylene glycol methacrylate (Formula no. 6) | 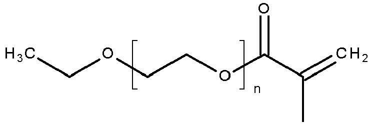 |
| Butoxy polyethylene glycol acrylate | 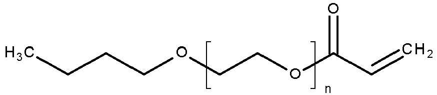 |
| (Formula no. 7) | |
| Butoxy polyethylene glycol methacrylate | 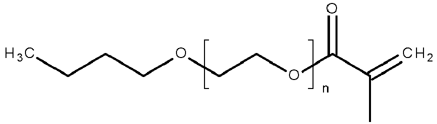 |
| (Formula no. 8) | |
| Ethylhexoxy polyethylene glycol acrylate | 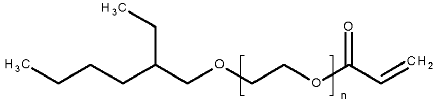 |
| (Formula no. 9) | |
| Ethylhexoxy polyethylene glycol methacrylate | 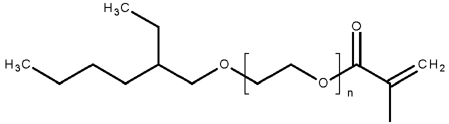 |
| (Formula no. 10) | |

Other commonly used names for methoxy polyethylene glycol acrylate (formula no. 3) are, for example, poly(ethylene glycol) methyl ether acrylate, acryloyl-PEG, methoxy-PEG acrylate, methoxy poly(ethylene glycol) monoacrylate, poly(ethylene glycol) monomethyl ether monoacrylate or mPEG acrylate.

These PEG acrylates can be purchased commercially, for example from Arkema under the Sartomer® trade name, from Evonik under the Visiomer® trade name, or from Sigma Aldrich.

The amount of the PEG acrylate units in copolymers of the invention is in the range from 10% to 25% by weight, preferably 11% to 22% by weight and more preferably 12% to 20% by weight, based on the total amount of 100% by weight of all the monomer units.

In a preferred hydrogenated nitrile-butadiene-PEG acrylate copolymer of the invention, the α,β-ethylenically unsaturated nitrile unit (a) is derived from acrylonitrile or methacrylonitrile, more preferably from acrylonitrile, the conjugated diene unit (b) from isoprene or 1,3-butadiene, more preferably from 1,3-butadiene, and the PEG acrylate unit (c) is derived from PEG acrylate of the general formula (I) where n is 3 to 8, more preferably from PEG acrylate of the general formula (I) with n = 3.

In addition, the hydrogenated nitrile-butadiene-PEG acrylate copolymer may contain one or more further copolymerizable monomers in an amount of 0.1% by weight to 10% by weight, preferably 0.1% by weight to 5% by weight, based on the total amount of 100% by weight of all monomer units. In that case, the amounts of the other monomer units are reduced in a suitable manner, such that the sum total is always 100% by weight. Further preferred copolymerizable monomers which may be used are, for example:
- aromatic vinyl monomers, preferably styrene, α-methylstyrene and vinylpyridine,
- fluorinated vinyl monomers, preferably fluoroethyl vinyl ether, fluoropropyl vinyl ether, o-fluoromethylstyrene, vinyl pentafluorobenzoate, difluoroethylene and tetrafluoroethylene, or else
- α-olefins, preferably C2-C12 olefins, for example ethylene, 1-butene, 4-butene, 4-methyl-1-pentene, 1-hexene or 1-octene,
- non-conjugated dienes, preferably C4-C12 dienes such as 1,4-pentadiene, 1,4-hexadiene, 4-cyanocyclohexene, 4-vinylcyclohexene, vinylnorbornene, dicyclopentadiene or else,
- alkynes such as 1- or 2-butyne,
- α,β-ethylenically unsaturated monocarboxylic acids, preferably acrylic acid, methacrylic acid, crotonic acid or cinnamic acid,
   α,β-ethylenically unsaturated monocarboxylic acid esters, preferably butyl acrylate,
- α,β-ethylenically unsaturated dicarboxylic acids, preferably maleic acid, fumaric acid, citraconic acid, itaconic acid,
- α,β-ethylenically unsaturated dicarboxylic acid monoesters, for example:
   o alkyl, especially C4-C18-alkyl, preferably n-butyl, tert-butyl, n-pentyl or n-hexyl, more preferably mono-n-butyl maleate, mono-n-butyl fumarate, mono-n-butyl citraconate, mono-n-butyl itaconate;
   o alkoxyalkyl, especially C4-C18-alkoxyalkyl, preferably C4-C12-alkoxyalkyl,
   o hydroxyalkyl, especially C4-C18-hydroxyalkyl, preferably C4-C12-hydroxyalkyl,
   o cycloalkyl, especially C5-C18-cycloalkyl, preferably C6-C12-cycloalkyl, more preferably monocyclopentyl maleate, monocyclohexyl maleate, monocycloheptyl maleate, monocyclopentyl fumarate, monocyclohexyl fumarate, monocycloheptyl fumarate, monocyclopentyl citraconate, monocyclohexyl citraconate, monocycloheptyl citraconate, monocyclopentyl itaconate, monocyclohexyl itaconate and monocycloheptyl itaconate,
   o alkylcycloalkyl, especially C6-C12-alkylcycloalkyl, preferably C7-C10-alkylcycloalkyl, more preferably monomethylcyclopentyl maleate and monoethylcyclohexyl maleate, monomethylcyclopentyl fumarate and monoethylcyclohexyl fumarate, monomethylcyclopentyl citraconate and monoethylcyclohexyl citraconate; monomethylcyclopentyl itaconate and monoethylcyclohexyl itaconate;
   o aryl, especially C6-C14-aryl, monoester, preferably monoaryl maleate, monoaryl fumarate, monoaryl citraconate or monoaryl itaconate, more preferably monophenyl maleate or monobenzyl maleate, monophenyl fumarate or monobenzyl fumarate, monophenyl citraconate or monobenzyl citraconate, monophenyl itaconate or monobenzyl itaconate or mixtures thereof,
   o unsaturated polyalkyl polycarboxylates, for example dimethyl maleate, dimethyl fumarate, dimethyl itaconate or diethyl itaconate; or
   o α,β-ethylenically unsaturated carboxylic esters containing amino groups, for example dimethylaminomethyl acrylate or diethylaminoethyl acrylate
      - copolymerizable antioxidants, for example N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy)aniline, N-phenyl-4-(4-vinylbenzyloxy)aniline or
      - crosslinkable monomers, for example divinyl components, for example divinylbenzene; di(meth)acrylic esters, for example ethylene glycol di(meth)acrylate, diethylene glycol di(meth)acrylate, butanediol di(meth)acrylate or polyethylene glycol di(meth)acrylate, or tri(meth)acrylic esters, for example trimethylolpropane tri(meth)acrylate; self-crosslinkable monomers, for example N-methylol(meth)acrylamide or N,N'-dimethylol(meth)acrylamide.

Some further copolymerizable monomers affect the physical properties of the hydrogenated nitrile-butadiene-PEG acrylate copolymer of the invention.

Copolymerized monomer units having at least one free carboxylic acid group, for example acrylic acid, methacrylic acid, ethylenically unsaturated dicarboxylic monoesters or ethylenically unsaturated dicarboxylic acids, generally lead to a deterioration in the ageing properties. As a result of free acid groups in the polymer, a drop in extension after ageing at elevated temperatures was detectable. At the same time, a rise in the glass transition temperature was observable, which has adverse effects on the demand for excellent low-temperature flexibility which has been made here. The effect on the ageing properties depends upon factors including the length of the copolymerized PEG acrylate unit, with particular deterioration in the ageing properties especially in the case of a copolymerized PEG-1 unit, i.e. in the case of PEG acrylate units derived from (alkoxy) monoethylene glycol (meth)acrylate.

In one embodiment, the hydrogenated nitrile-butadiene-PEG acrylate copolymer of the invention contains, aside from the α,β-ethylenically unsaturated nitrile unit, the conjugated diene unit and the PEG acrylate unit derived from a PEG acrylate of the general formula (I) where n is 1, no monomer units having a free carboxylic acid group.

Even more preferably, the hydrogenated nitrile-butadiene-PEG acrylate copolymer contains, aside from the α,β-ethylenically unsaturated nitrile unit, the conjugated diene unit and the PEG acrylate unit derived from a PEG acrylate of the general formula (I), no monomer units having a free carboxylic acid group. Most preferably, the hydrogenated nitrile-butadiene-PEG acrylate copolymer contains, aside from the α,β-ethylenically unsaturated nitrile unit, the conjugated diene unit and the PEG acrylate unit derived from a PEG acrylate of the general formula (I), no further monomer units. This means that this embodiment consists solely of α,β-ethylenically unsaturated nitrile units, conjugated diene units and PEG acrylate units derived from a PEG acrylate of the general formula (I).

The hydrogenated nitrile-butadiene-PEG acrylate copolymer of the invention typically has a number-average molecular weight (Mn) of 10 000 to 2 000 000 g/mol, preferably 50 000 to 1 000 000 g/mol, more preferably 100 000 to 500 000 g/mol and most preferably 150 000 to 300 000 g/mol.

The hydrogenated nitrile-butadiene-PEG acrylate copolymer of the invention typically has a polydispersity index (PDI=Mw/Mn where Mw is the weight-average molecular weight) of 1.5 to 6, preferably 2 to 5 and more preferably 2.5 to 4.

The hydrogenated nitrile-butadiene-PEG acrylate copolymer of the invention typically has a Mooney viscosity (ML1+4@100°C) of 10 to 150, preferably of 20 to 120 and more preferably of 25 to 100.

A power transmission belt comprising the hydrogenated nitrile-butadiene-PEG acrylate copolymer of the invention has obtained optimal result in term of high temperature resistance, but in particular in term of low oil swell and low-temperature characteristics.

Advantageously, the hydrogenated nitrile-butadiene-PEG acrylate copolymer used for making the transmission systems in which the power transmission belt is partially in an oil bath or in direct contact with oil and impurities has a high level of hydrogenation, for example so-called fully saturated hydrogenated nitrile-butadiene-PEG acrylate copolymer can be used. These hydrogenated nitrile-butadiene-PEG acrylate copolymers have a percentage of residual double bonds of 0.9% at most. Hydrogenated nitrile-butadiene-PEG acrylate copolymer with a lower level of unsaturation can also be used in alternative, such as, for example, so-called partially saturated hydrogenated nitrile-butadiene-PEG acrylate copolymer having a saturation level of 4% or 5.5%.

### Process for preparing hydrogenated nitrile-butadiene-PEG acrylate copolymers

The preparation of the nitrile-butadiene-PEG acrylate copolymers required for the hydrogenation can be done by polymerization of the aforementioned monomers which has been described extensively in the literature (e.g. Houben-Weyl, Methoden der Organischen Chemie [Methods of Organic Chemistry], vol. 14/1, 30 Georg Thieme Verlag Stuttgart 1961) and is not particularly restricted. In general, the process is one in which α,β-ethylenically unsaturated nitrile units, conjugated diene units and PEG acrylate units are copolymerized as desired. The polymerization process used may be any known emulsion polymerization process, suspension polymerization process, bulk polymerization process and solution polymerization process. Emulsion polymerization is especially understood to mean a process known per se in which the reaction medium used is usually water (see, inter alia, Römpp Lexikon der Chemie [Römpp's Chemistry Lexicon], volume 2, 10th edition 1997; P. A. Lovell, M. S. El-Aasser, Emulsion Polymerization and Emulsion Polymers, John Wiley & Sons, ISBN: 0471 96746 7; H. Gerrens, Fortschr. Hochpolym. Forsch. 1, 234 (1959)). The incorporation rate of the termonomer can be adjusted directly by the person skilled in the art, such that a hydrogenated nitrile-butadiene-PEG acrylate copolymer of this invention is obtained. The monomers can be initially charged or converted by incrementation in a number of steps.

After the copolymerization of the nitrile-butadiene-PEG acrylate copolymers, they are at least partly hydrogenated (hydrogen addition reaction). In the at least partly hydrogenated nitrile-butadiene-PEG acrylate copolymers, at least some of the C=C double bonds of the repeat unit derived from the conjugated diene have been specifically hydrogenated. The level of hydrogenation of the conjugated diene units (b) in hydrogenated nitrile-butadiene-PEG acrylate copolymers of the invention is preferably 50% or more, more preferably 90% or more, most preferably 99% or more.

The hydrogenation of nitrile-butadiene copolymers is known, for example from US-A-3 700 637, DE-A-2 539 132, DE-A-3 046 008, DE-A-3 046 251, DE-A-3 227 650, DE-A-3 329 974, EP-A-111 412, FR-B 2 540 503. Hydrogenated nitrile-butadiene copolymers are notable for high breaking strength, low abrasion, consistently low deformation after pressure and tensile stress, and good oil resistance, but in particular for remarkable stability against thermal and oxidative influences.

The body of the power transmission belt may advantageously comprise one or more further elastomers that is chosen from the group constituted by natural rubber (NR), polychloroprene (CR), acrylonitrile butadiene (NBR) and associated hydrogenated elastomers known as hydrogenated acrylonitrile butadiene (HNBR) or zinc salts of hydrogenated acrylonitrile butadiene seamed with esters of unsaturated carboxylic acid, polyisoprene, styrene-butadiene rubbers, ethylene-alpha-olefin elastomers, EPDM, polyurethane, fluoroelastomers, ethylene-acrylic elastomers (AEM), bromobutyls, chlorosulphonated polythene (CSM) or chlorosulphonated alkyl, chlorinated polythene, epoxidized natural rubber, SBR, NBR carboxylates, HNBR carboxylates, ACM and mixtures of these compounds.

Some examples of HNBR copolymers that can be used as further elastomers in the body compound, but also in the different treatments of the various elements forming the power transmission belt, include copolymers belonging to the THERBAN® family made by ARLANXEO, such as THERBAN 3407 with 34% nitrile groups and a hydrogenation level of 0.9% at most, THERBAN 3406 with 34% nitrile groups and an unsaturation level of 0.9% at most, THERBAN 3607 with 36% nitrile groups and an unsaturation level of 0.9% at most, THERBAN 3446 with 34% nitrile groups and an unsaturation level of 4% at most, THERBAN 3447 with 34% nitrile groups and an unsaturation level of 5.5% at most, THERBAN 3627 with 36% nitrile groups and an unsaturation level of 2% at most, THERBAN 3629 with 36% nitrile groups and an unsaturation level of 2% at most, and THERBAN 3907 with 39% nitrile groups and an unsaturation level of 0.9% at most.

Alternatively, it is also possible to use HNBRs made by Nippon Zeon as further elastomers with the name ZETPOL®. In particular, ZETPOL 2000 with 36% nitrile groups and an unsaturation level of 0.9% at most, ZETPOL 2000L with 36% nitrile groups and an unsaturation level of 0.9% at most, ZETPOL 2010 with 36% nitrile groups and an unsaturation level of 4% at most, ZETPOL 2010L with 36% nitrile groups and an unsaturation level of 4% at most, ZETPOL 2010H with 36% nitrile groups and an unsaturation level of 4% at most, ZETPOL 2020 with 36% nitrile groups and an unsaturation level of 5.5% at most, and ZETPOL 2020L with 36% nitrile groups and an unsaturation level of 5.5% at most.

More advantageously, the acrylonitrile units in the further elastomer for applications in oil are between 33% and 51%, for example 50% by weight, while for dry applications they are between 15% and 25% by weight, for example 21% by weight.

Even more advantageously, a polymer formed by a mixture of one or more copolymers, obtained starting from a diene monomer and a monomer containing nitrile groups where an acid or salt of an unsaturated carboxylic acid is added to one or more of these copolymers, is used in combination with a first polymer. More advantageously, the unsaturated carboxylic acid is methacrylic or acrylic acid and said salt is a zinc salt of the methacrylic or acrylic acid. Even more advantageously, a zinc salt of methacrylic acid is used. Even more advantageously, the zinc salt of methacrylic acid is added in a quantity in the range between 10 and 60 phr.

For example, the elastomers sold by Zeon under the following names can be used advantageously: ZSC 1295, ZSC 2095, ZSC 2195, ZSC 2295, ZSC 2295L, ZSC 2295R and ZSC 2395. More advantageously ZSC 2095 is used.

In particular, it is possible to partially replace the previously mentioned HNBRs, namely ZETPOL and/or THERBAN with a ZSC that comprises an unsaturated carboxylic acid and zinc oxide and/or with THERBAN ART that comprises an unsaturated carboxylic acid salt.

Mixed compounds of polyolefin and rubber containing acrylonitrile units are also preferred, more preferably compounds containing a copolymer of ethylene with NBRs or HNBRs or the above-mentioned modified HNBRs. For example, rubbers containing EPDM (ethylene-propylene diene monomer) or EPM (ethylene-propylene monomer) can be added to polymers containing acrylonitrile units, in quantities preferably in the range between 1% and 30%.

In addition to the elastomeric materials, the body compound can comprise conventional additives such as, for example, reinforcement agents, extenders, pigments, stearic acid, accelerators, vulcanization agents, antioxidants, activators, initiators, plasticizers, waxes, pre-vulcanization inhibitors, anti-degradants, process oils and similar.

The skilled person may vary the quantity of the various additives according to the specific needs.

Advantageously, carbon black can be employed as a filler, being advantageously added in quantities in the range between 0 and 80 phr, more advantageously about 40 phr. Advantageously, light-coloured reinforcing filers such as talc, calcium carbonate, silica and silicates are added in quantities advantageously in the range between 0 and 80 phr, advantageously about 40 phr. It is also possible to advantageously use silanes in quantities in the range between 0 and 5 phr.

Advantageously, zinc and magnesium oxides are added in a quantity ranging between 0 and 15 phr.

Advantageously, ester plasticizers such as trimellitates or ethyl esters or ethylene glycol ether esters (e.g. ADK sizer 700 or ADK sizer 735) are added in a quantity advantageously ranging between 0 and 20 phr.

Advantageously, pre-vulcanization coagents such as triallyl cyanurates and organic or inorganic methacrylates such as metal salts are advantageously added in a quantity ranging between 0 and 20 phr, or organic peroxides, such as isopropyl benzene peroxide for example, in a quantity advantageously ranging between 0 and 15 phr.

Advantageously, the mixture in the elastomeric material moreover comprises reinforcement fibres, more advantageously in an amount comprised between 2 and 40 phr, even more advantageously 20 phr. Advantageously, the reinforcement fibres have a length comprised between 0.1 and 10 mm.

The use of fibres enables a further increase in the mechanical characteristics of the mixture constituting the body. Advantageously, the reinforcement fibres comprise aromatic polyamides, more advantageously aramides, for example Technora© fibres can be advantageously used, which can be adhered to the mixture by means of an RFL-based treatment. For example, the lattice used can have a base of VP-SBR, i.e., a copolymer of vinylpiridine and styrenebutadiene.

Particularly effective have proven aramidic fibres, such as, for example, Technora® fibres of Teijn having a length of 1 mm. Preferably, the power transmission belt is a toothed power transmission belt.

Preferably, the pitch of the toothed belts is between 5 and 10 mm, more preferably between 8 and 10 mm.

A power transmission belt according to the present invention is made by using the known manufacturing processes.

The manufacturing process for the power transmission belt comprises a step during which the compound loaded with fibres is passed through a calender so as to form a strip of material in which the fibres are arranged in the direction of calendering. The compound with fibres oriented in the direction of calendering is then collected on a roller.

The power transmission belts of the present invention are particularly indicated for use in vehicle transmission systems. More preferably, the power transmission belts according to the present invention are also suitable for being used in transmission systems in which, in use, they are in direct contact with or partially immersed in oil.

In particular, excellent results have been achieved in the case where the power transmission belt is used as a replacement for traditional gear or chain systems inside the crankcase, systems in which the power transmission belt is exposed for its entire working life to means that continuously place it in contact with oil or, if necessary, is partially immersed in an oil bath.

In particular, the power transmission belt of the present invention has proved to be particularly effective when used in a transmission system commonly known as balance shaft.

In use, the power transmission belts in the respective control systems are in direct contact with oil.

Alternatively, the power transmission belts according to the present invention can also be used as dry timing belts. Furthermore, it is also possible to use the power transmission belt of the present invention in the main transmission for driving cams and also for driving the injection pump in diesel engines.

From an examination of the characteristics of the power transmission belt produced according to the present invention, the advantages that can be achieved with it are evident.

It has been experimentally verified that the use of the power transmission belt according to the present invention comprising the hydrogenated nitrile-butadiene-PEG acrylate copolymer ensures a significant improvement in low-temperature characteristics whilst maintaining an high temperature resistance, and the same or lower swell in oil as compared to known power transmission belts.

In this way, the power transmission belts according to the invention assures that the power transmission belt does not need to be replaced for the entire working life of the vehicle.

It has also been verified that the power transmission belts according to the present invention also allow achieving effective oil resistance even at high temperatures and consequently pass the durability tests to which power transmission belts are subjected in order to be used in motor vehicles and therefore avoid all the power transmission belt problems when used continuously in contact with oil and, in particular, the fall-off in mechanical characteristics, less adhesion, worse meshing and less wear resistance.

Furthermore, it has also been verified that the power transmission belts of the present invention can be used as dry power transmission belts in high-operating temperature timing systems, where high operating temperature is intended as a temperature greater than 130°C.

Furthermore, the power transmission belts according to the present invention have a very low swelling, in particular in the use in fuel-mixed oil.

While some embodiments have been disclosed by way of illustration of the invention, it is apparent that the skilled in the art may make modifications to the kind of fibres and to the materials forming it, as well as to the materials of the body compound and of the other components of the power transmission belt without departing from the scope of the present invention.

### Example 1 and Comparative Example 2 - Cold temperature flexibility test

Four toothed belts have been tested with different tests.

Two toothed belts (A) and (B) comprise the full body comprising a compound having as elastomeric material HNBR THERBAN 3907. Two further toothed belts (C) and (D) are identical to the previous toothed belts but comprise a body having as elastomeric material the hydrogenated nitrile-butadiene-PEG acrylate copolymer according to the invention.

More precisely the hydrogenated nitrile-butadiene-PEG acrylate copolymer is an hydrogenated nitrile-butadiene-PEG acrylate copolymer having 31% acrylonitrile (ACN) content, 54.9 % in weight of butadiene and 14.1% in weight of a PEG with n=3, R=ethyl and R1=-CH3.

To this hydrogenated nitrile-butadiene-PEG acrylate copolymer the usual additives are added in the quantities known to the skilled person both to the comparison power transmission belts and to the power transmission belts according to the invention. A toothed power transmission belt is formed having a standard glass fibre cord for automotive use and a standard fabric for toothed belts as the one known for the automotive use and previously described in other examples of EP0965771. A resistance layer having the composition as in the example of EP1157813 is also added.

The toothed belts are 15 mm width, have the known RPP plus profile as tooth profile, i.e. a standard geometry of the teeth. The pitch is 9.525 mm and the belt has 118 teeth.

Cold properties performance were measured as a variation of Tg after 100 hours intervals. The higher Tg correspond to lower performances.

This flex or flexibility test as measure of Tg gives indication on the low temperature flexibility of the toothed belt and this latter is known to prevent the rupture of the toothed belt when the engine is started at low temperatures.

The low temperature flexibility is measured in term of Tg variation, i.e. glass transition temperature variation. Usually at an higher Tg corresponds a lower performance at low temperature.

The measurements were conducted with the rig illustrated in Fig. 2 and the toothed belts were running always in direct contact with oil.

The test conditions of this dynamic test are reported in the table 1 below.

**Table 1:**

| FLEX TEST |
|---|
| TESTING CONDITION: |
| Constant speed: 6000rpm |
| Constant tension: 300N |
| Pulleys teeth: 19 |
| Pulleys diameter: 57.6 mm |
| Idlers diameter: 31 mm |
| Oil: ENI I-sint MS 5W40 |
| Oil temperature: 140°C |

The load as depicted in the rig was 300 N.

The Tg value was tested on a DSC TA instrument Q200 with the following testing condition

| DSC TA Instruments - Q200 |
|---|
| TESTING CONDITION: |
| 40°C → -90°C |
| -90°C → 40°C |
| Scan rate: 10°C/min |

A small sample of 5-10 mg is taken from the back of the toothed belt and scanned with the DSC without compromising the subsequent performance of the toothed belt.

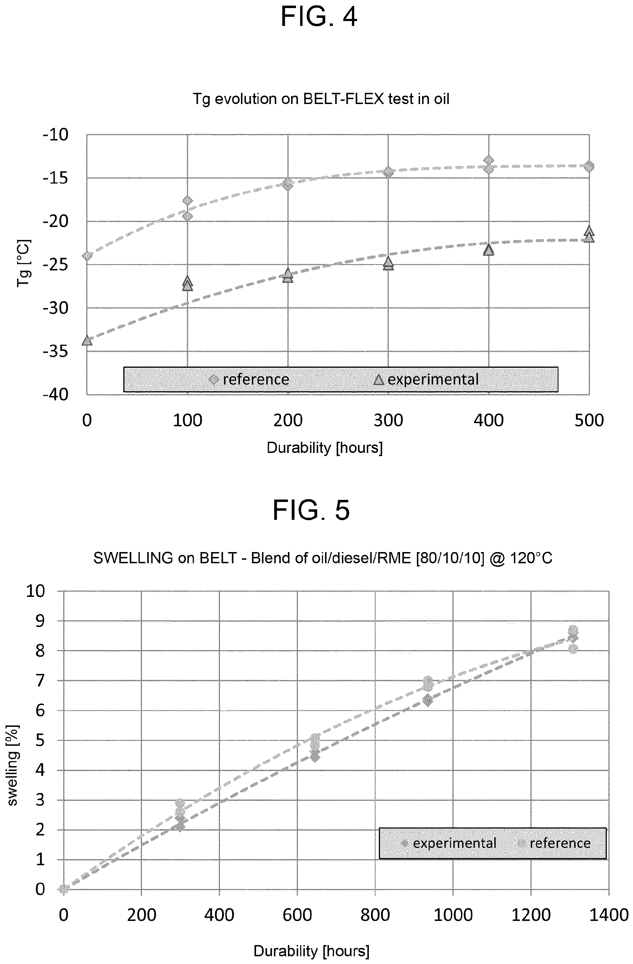

As it can be read in the graph of Fig. 4 the Tg of the toothed belt comprising the hydrogenated nitrile-butadiene-PEG acrylate copolymer according to the present invention is always much lower than the comparison toothed belt.

The numerical results obtained are also reported in the table 2 below:

**Table 2:**

| Example 1 | | Comparative Example 2 | |
|---|---|---|---|
| Belt A Invention | | Belt C Comparison | |
| H | Tg [°C] | H | Tg [°C] |
| 0 | -33,7 | 0 | -24 |
| 100 | -26,85 | 100 | -19,43 |
| 200 | -26,44 | 200 | -15,93 |
| 300 | -25,01 | 300 | -14,2 |
| 400 | -23,16 | 400 | -12,94 |
| 500 | -21,06 | 500 | -13,5 |

| Belt B Invention | | Belt D Comparison | |
|---|---|---|---|
| 0 | -33,7 | 0 | -24 |
| 100 | -27,4 | 100 | -17,61 |
| 200 | -25,95 | 200 | -15,47 |
| 300 | -24,61 | 300 | -14,5 |
| 400 | -23,34 | 400 | -14 |
| 500 | -21,8 | 500 | -13,8 |

### Example 3 and Comparative Example 4 - Oil Swelling test

Four toothed belts (Belt 1 to 4) were tested, two having a composition as the inventive toothed belts of example 1 (Belt 1 and Belt 2) and two as the comparative toothed belts of example 2 (Belt 3 and Belt 4).

The differences are only in the dimension of the toothed belt: for this test the toothed belts have 10 mm width, RPP plus profile, pitch 9.525, 43 teeth.

The swelling properties have been measured by measuring the toothed belt width with the following test conditions.

| SWELLING TEST |
|---|
| TESTING CONDITION: |
| Speed: 2500/4500 rpm |
| Pulleys teeth: 19 |
| Pulleys diameter: 57.6 mm |
| Blend of oil / diesel / rme (80 / 10 / 10) |
| Oil: ENI I-sint MS 5W40 |
| Oil temperature: 120°C |

The speed of the engine is set at 2500 rpm for 10 sec and then is increased up to 4500 rpm during 90 sec. After this second step the engine remains at 4500 rpm for 10 sec and successively the speed drops to 2500 rpm again during 90 sec and then the cycle starts again.

The oil swelling was measured as a relative difference in width of the toothed belt. As it can be seen in Fig. 5, the oil swelling remains at least equal or is lower than the swelling on the comparative toothed belts using the standard HNBR THERBAN 3907. The results obtained are also reported in the table 3 below:

**Table 3:**

| | | Belt 1 Invention | Belt 2 Invention |
|---|---|---|---|
| | [h] | Oil swell [%] | Oil swell [%] |
| | 0,1 | 0,01 | 0,01 |
| | 299 | 2,40 | 2,10 |
| | 645 | 4,62 | 4,43 |
| | 935 | 6,40 | 6,30 |
| | 1308 | 8,60 | 8,44 |
| | | | |

| | | Belt 3 Comparison | Belt 4 Comparison |
|---|---|---|---|
| | [h] | Oil swell [%] | Oil swell [%] |
| | 0,1 | 0,01 | 0,01 |
| | 299 | 2,90 | 2,60 |
| | 645 | 4,83 | 5,07 |
| | 935 | 6,80 | 7,00 |
| | 1308 | 8,07 | 8,70 |

It can be concluded from the examples that the toothed belt comprising a body with the terpolymer of the invention is able to achieve the best balance of the properties of oil swelling and low temperature flexibility.

## Claims

1. Power transmission belt comprising a hydrogenated nitrile-butadiene-PEG acrylate copolymer containing:
a) 25% to 38% by weight of at least one α,β-ethylenically unsaturated nitrile unit,
b) 40% to 60% by weight of at least one conjugated diene unit and
c) 10% to 25% by weight of at least one PEG acrylate unit derived from a PEG acrylate of the general formula (I) 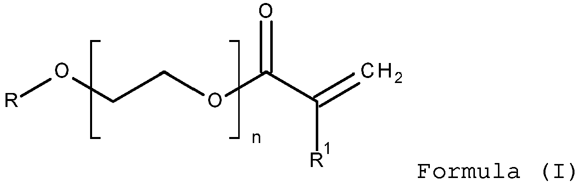 where
R is hydrogen or branched or unbranched C1-C20-alkyl, preferably methyl, ethyl, butyl or ethylhexyl,
n is 1 to 8 and
R1 is hydrogen or CH3-,
where the hydrogenated nitrile-butadiene-PEG acrylate copolymer, if n is 1, does not contain any further copolymerizable monomer unit having a free carboxylic acid group.

2. Power transmission belt according to claim 1, **characterized in that** the nitrile units (a) are 29% to 33% by weight.

3. Power transmission belt according to any of claims 1 to 2, **characterized in that** the α,β-ethylenically unsaturated nitrile units (a) is acrylonitrile, methacrylonitrile, ethacrylonitrile or a mixtures thereof, and is preferably acrylonitrile.

4. Power transmission belt according to any of claims 1 to 3, **characterized in that** the conjugated diene units (b) are 1,3-butadiene, isoprene, 2,3-dimethylbutadiene, 1,3-pentadiene (piperylene) or mixtures thereof, preferably 1,3-butadiene.

5. Power transmission belt according to any of claims 1 to 4, **characterized in that** the PEG acrylate unit (c) is methoxy, ethoxy, butoxy or ethylhexoxy polyethylene glycol (meth)acrylate having 2 to 8 repeat ethylene glycol units, more preferably methoxy or ethoxy polyethylene glycol (meth)acrylate having 2 to 5 repeat ethylene glycol units and most preferably methoxy or ethoxy polyethylene glycol (meth)acrylate having 3 repeat ethylene glycol units.

6. Power transmission belt according to any of claims 1 to 5, **characterized in that** the level of hydrogenation of the conjugated diene units (b) is more than 50%.

7. Power transmission belt according to any of claims 1 to 5, **characterized in that** the level of hydrogenation of the conjugated diene units (b) is more than 90%.

8. Power transmission belt according to any of claims 1 to 7, **characterized in that** the hydrogenated nitrile-butadiene-PEG acrylate copolymer is within the mixture forming the body of the power transmission belt.

9. Power transmission belt according to any of claims 1 to 8, **characterized in that** hydrogenated nitrile-butadiene-PEG acrylate copolymer is constituted by more than 50% by weight, calculated on the total weight of elastomer of the mixture forming the body of the power transmission belt.

10. Power transmission belt according to any of claims 1 to 9, **characterized in that** said material is loaded with fibres in a quantity of between 1% and 50% by weight of the total non-elastomeric material.

11. Power transmission belt according to any of claims 1 to 9, **characterized in that** it comprises a hydrogenated nitrile-butadiene-PEG acrylate copolymer containing:
a) 27% to 37% by weight of at least one α,β-ethylenically unsaturated nitrile unit,
b) 42% to 58% by weight of at least one conjugated diene unit and
c) 11% to 22% by weight of at least one PEG acrylate unit derived from a PEG acrylate of the general formula (I) 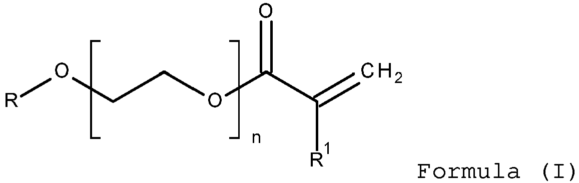 where
R is hydrogen or branched or unbranched C1-C20-alkyl, preferably methyl, ethyl, butyl or ethylhexyl,
n is 2 to 8 and
R1 is hydrogen or CH3-.

12. Power transmission belt according to any of claims 1 to 9, **characterized in that** it comprises a hydrogenated nitrile-butadiene-PEG acrylate copolymer containing:
a) 29% to 36% by weight of at least one α,β-ethylenically unsaturated nitrile unit,
b) 44% to 59% by weight of at least one conjugated diene unit and
c) 12% to 20% by weight of at least one PEG acrylate unit derived from a PEG acrylate of the general formula (I) 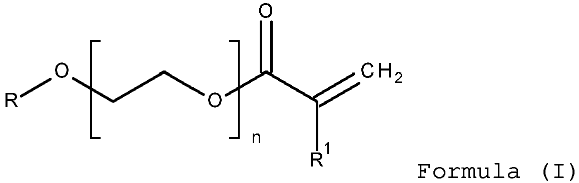 where
R is hydrogen or branched or unbranched C1-C20-alkyl, preferably methyl, ethyl, butyl or ethylhexyl,
n is 2 to 5 and
R1 is hydrogen or CH3-.

13. Power transmission belt according to any of claims 1 to 2, **characterized in that** it is a toothed power transmission belt.

14. Assembly comprising a power transmission belt according to any of claims 1 to 13 and oil lubricating the engine and continuously contacting the power transmission belt during the use of the power transmission belt.

15. Use of a power transmission belt according to any of claims 1 to 14 in a system in which said power transmission belt is in direct contact with oil or partially immersed in oil.

## Patentansprüche

1. Kraftübertragungsriemen, umfassend ein hydrogeniertes Nitril-Butadien-PEG-Acrylat-Copolymer, enthaltend:
(a) 25 bis 38 Gew.-% von mindestens einer α,β-ethylenisch ungesättigten Nitrileinheit,
(b) 40 % bis 60 Gew.-% von mindestens einer konjugierten Dieneinheit, und
(c) 10 bis 25 Gew.-% von mindestens einer PEG-Acrylateinheit abgeleitet von einem PEG-Acrylat der allgemeinen Formel (I), 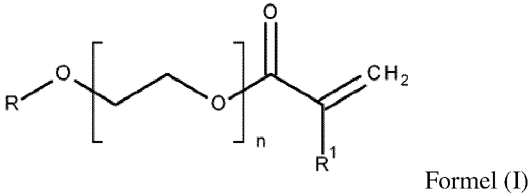 wobei
R Wasserstoff oder verzweigtes oder unverzweigtes C₁-C₂₀-Alkyl, bevorzugt Methyl, Ethyl, Butyl oder Ethylhexyl ist,
n 1 bis 8 ist und
R₁ Wasserstoff oder CH₃- ist,
wobei das hydrogenierte Nitril-Butadien-PEG-Acrylat-Copolymer, wenn n 1 ist, keine weiteren copolymerisierbaren Monomereinheiten aufweisend eine freie Carbonsäuregruppe enthält.

2. Kraftübertragungsriemen gemäß Anspruch 1, **dadurch gekennzeichnet, dass** die Nitrileinheiten (a) 29 bis 33 Gew.-% sind.

3. Kraftübertragungsriemen gemäß einem der Ansprüche 1 bis 2, **dadurch gekennzeichnet, dass** die α,β-ethylenisch ungesättigte Nitrileinheiten (a) Acrylnitril, Methacrylnitril, Ethacrylnitril oder Mischungen davon und bevorzugt Acrylnitril sind.

4. Kraftübertragungsriemen gemäß einem der Ansprüche 1 bis 3, **dadurch gekennzeichnet, dass** die konjugierten Dieneinheiten (b) 1,3-Butadien, Isopren, 2,3-Dimethylbutadien, 1,3-Pentadien (Piperylen) oder Mischungen davon, bevorzugt 1,3-Butadien sind.

5. Kraftübertragungsriemen gemäß einem der Ansprüche 1 bis 4, **dadurch gekennzeichnet, dass** die PEG-Acrylateinheit (c) Methoxy-, Ethoxy-, Butoxy- oder Ethylhexoxy-Polyethylenglycolmethacrylat aufweisend 2 bis 8 wiederholende Ethylenglycoleinheiten, meist bevorzugt Methoxy- oder Ethoxypolyethylenglycolmethacrylat aufweisend 2 bis 5 wiederholende Ethylenglycoleinheiten und meist bevorzugt Methoxy- oder Ethoxypropolyethylenglycolmethacrylat aufweisend 3 wiederholende Ethylenglycoleinheiten ist.

6. Kraftübertragungsriemen gemäß einem der Ansprüche 1 bis 5, **dadurch gekennzeichnet, dass** der Hydrogenierungsanteil der konjugierten Dieneinheiten (b) mehr als 50 % ist.

7. Kraftübertragungsriemen gemäß einem der Ansprüche 1 bis 5, **dadurch gekennzeichnet, dass** der Hydrogenierungsgrad der konjugierten Dieneinheiten (b) mehr als 90 % ist.

8. Kraftübertragungsriemen gemäß einem der Ansprüche 1 bis 7, **dadurch gekennzeichnet, dass** das hydrogenierte Nitril-Butadien-PEG-Acrylat-Copolymer sich in der Mischung befindet, welche den Körper des Kraftübertragungsriemens bildet.

9. Kraftübertragungsriemen gemäß einem der Ansprüche 1 bis 8, **dadurch gekennzeichnet, dass** das hydrogenierte Nitril-Butadien-PEG-Acrylat-Copolymer durch mehr als 50 Gew.-%, berechnet auf dem Gesamtgewicht des Elastomers der Mischung, welche den Körper des Kraftübertragungsriemens, konstituiert.

10. Kraftübertragungsriemen gemäß einem der Ansprüche 1 bis 9, **dadurch gekennzeichnet, dass** das Material mit Fasern in einer Menge zwischen 1 und 50 Gew.-% des gesamten nicht-elastomeren Materials beladen ist.

11. Kraftübertragungsriemen gemäß einem der Ansprüche 1 bis 9, **dadurch gekennzeichnet, dass** es ein hydrogeniertes Nitril-Butadien-PEG-Acrylat-Copolymer enthaltend:
(a) 27 bis 37 Gew.-% von mindestens einer α,β-ethylenisch ungesättigten Nitrileinheit,
(b) 42 bis 58 Gew.-% von mindestens einer konjugierten Dieneinheit, und
(c) 11 bis 22 Gew.-% von mindestens einer PEG-Acrylateinheit abgeleitet von einem PEG-Acrylat der allgemeinen Formel (I), 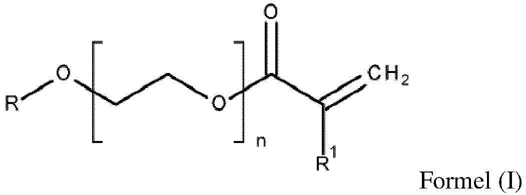 enthält, wobei
R Wasserstoff oder verzweigtes oder unverzweigtes C₁-C₂₀-Alkyl, bevorzugt Methyl, Ethyl, Butyl oder Ethylhexyl ist,
n 2 bis 8 ist, und
R₁ Wasserstoff oder CH₃- ist.

12. Kraftübertragungsriemen gemäß einem der Ansprüche 1 bis 9, **dadurch gekennzeichnet, dass** dieser ein hydrogeniertes Nitril-Butadien-PEG-Acrylat-Copolymer enthaltend:
(a) 29 bis 36 Gew.-% von mindestens einer α,β-ethylenisch ungesättigten Nitrileinheit,
(b) 44 bis 59 Gew.-% von mindestens einer konjugierten Dieneinheit, und
(c) 12 bis 20 Gew.-% von mindestens einer PEG-Acrylateinheit abgeleitet von einem PEG-Acrylat der allgemeinen Formel (I), 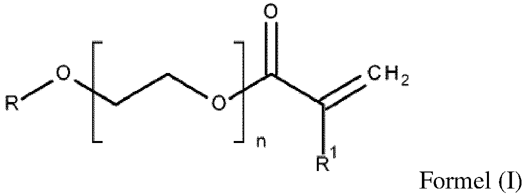 enthält, wobei
R Wasserstoff oder verzweigtes oder unverzweigtes C₁ bis C₂₀ Alkyl, bevorzugt Methyl, Ethyl, Butyl oder Ethylhexyl ist, n 2 bis 5 ist, und
R₁ Hydrogen oder CH₃- ist.

13. Kraftübertragungsriemen gemäß einem der Ansprüche 1 bis 2, **dadurch gekennzeichnet, dass** dieser ein gezahnter Kraftübertragungsriemen ist.

14. Anordnung, umfassend einen Kraftübertragungsriemen gemäß einem der Ansprüche 1 bis 13 und ein Öl, welches den Motor schmiert und den Kraftübertragungsriemen während der Verwendung des Kraftübertragungsriemens kontinuierlich kontaktiert.

15. Verwendung eines Kraftübertragungsriemens gemäß einem der Ansprüche 1 bis 14 in einem System, in welchem dieser Kraftübertragungsriemen in ständigem Kontakt mit Öl steht oder teilweise in Öl eingetaucht ist.

## Revendications

1. Courroie de transmission de puissance comprenant un copolymère de nitrile-butadiène-acrylate de PEG hydrogéné contenant :
a) 25 % à 38 % en poids d'au moins une unité de nitrile α,β-éthyléniquement insaturée,
b) 40 % à 60 % en poids d'au moins une unité de diène conjuguée et
c) 10 % à 25 % en poids d'au moins une unité d'acrylate de PEG dérivée d'un acrylate de PEG de formule générale (I) 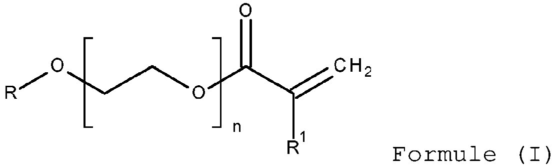 où
R est un hydrogène ou un C1-C20-alkyle ramifié ou non ramifié, de préférence le méthyle, l'éthyle, le butyle ou l'éthylhexyle,
n est 1 à 8 et
R1 est un hydrogène ou CH3-,
où le copolymère de nitrile-butadiène-acrylate de PEG hydrogéné, si n est 1, ne contient aucune autre unité monomère copolymérisable ayant un groupe d'acide carboxylique libre.

2. Courroie de transmission de puissance selon la revendication 1, **caractérisée en ce que** les unités de nitrile (a) représentent 29 % à 33 % en poids.

3. Courroie de transmission de puissance selon l'une quelconque des revendications 1 et 2, **caractérisée en ce que** les unités de nitrile α,β-éthyléniquement insaturées (a) sont l'acrylonitrile, le méthacrylonitrile, l'éthacrylonitrile ou un mélange de ceux-ci, et sont de préférence l'acrylonitrile.

4. Courroie de transmission de puissance selon l'une quelconque des revendications 1 à 3, **caractérisée en ce que** les unités de diène conjuguées (b) sont le 1,3-butadiène, l'isoprène, le 2,3-diméthylbutadiène, le 1,3-pentadiène (pipérylène) ou les mélanges de ceux-ci, de préférence le 1,3-butadiène.

5. Courroie de transmission de puissance selon l'une quelconque des revendications 1 à 4, **caractérisée en ce que** l'unité d'acrylate de PEG (c) est le méthoxy, l'éthoxy, le butoxy ou l'éthylhexoxy polyéthylène glycol (méth)acrylate ayant 2 à 8 unités d'éthylène glycol de répétition, plus préférentiellement le méthoxy ou l'éthoxy polyéthylène glycol (méth)acrylate ayant 2 à 5 unités d'éthylène glycol de répétition et le plus préférentiellement le méthoxy ou l'éthoxy polyéthylène glycol (méth)acrylate ayant 3 unités d'éthylène glycol de répétition.

6. Courroie de transmission de puissance selon l'une quelconque des revendications 1 à 5, **caractérisée en ce que** le niveau d'hydrogénation des unités de diène conjuguées (b) est supérieur à 50 %.

7. Courroie de transmission de puissance selon l'une quelconque des revendications 1 à 5, **caractérisée en ce que** le niveau d'hydrogénation des unités de diène conjuguées (b) est supérieur à 90 %.

8. Courroie de transmission de puissance selon l'une quelconque des revendications 1 à 7, **caractérisée en ce que** le copolymère de nitrile-butadiène-acrylate de PEG hydrogéné se trouve dans le mélange formant le corps de la courroie de transmission de puissance.

9. Courroie de transmission de puissance selon l'une quelconque des revendications 1 à 8, **caractérisée en ce que** le copolymère de nitrile-butadiène-acrylate de PEG hydrogéné est constitué par plus de 50 % en poids, calculé sur le poids total d'élastomère du mélange formant le corps de la courroie de transmission de puissance.

10. Courroie de transmission de puissance selon l'une quelconque des revendications 1 à 9, **caractérisée en ce que** ledit matériau est chargé de fibres dans une quantité d'entre 1 % et 50 % en poids du matériau non-élastomère total.

11. Courroie de transmission de puissance selon l'une quelconque des revendications 1 à 9, **caractérisée en ce qu'**elle comprend un copolymère de nitrile-butadiène-acrylate de PEG hydrogéné contenant :
a) 27 % à 37 % en poids d'au moins une unité de nitrile α,β-éthyléniquement insaturée,
b) 42 % à 58 % en poids d'au moins une unité de diène conjuguée et
c) 11 % à 22 % en poids d'au moins une unité d'acrylate de PEG dérivée d'un acrylate de PEG de formule générale (I) 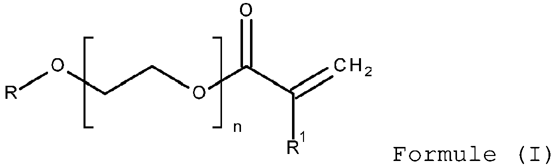 où
R est un hydrogène ou un C1-C20-alkyle ramifié ou non ramifié, de préférence le méthyle, l'éthyle, le butyle ou l'éthylhexyle,
n est 2 à 8 et
R1 est un hydrogène ou CH3-.

12. Courroie de transmission de puissance selon l'une quelconque des revendications 1 à 9, **caractérisée en ce qu'**elle comprend un copolymère de nitrile-butadiène-acrylate de PEG hydrogéné contenant :
a) 29 % à 36 % en poids d'au moins une unité de nitrile α,β-éthyléniquement insaturée,
b) 44 % à 59 % en poids d'au moins une unité de diène conjuguée et
c) 12 % à 20 % en poids d'au moins une unité d'acrylate de PEG dérivée d'un acrylate de PEG de formule générale (I) 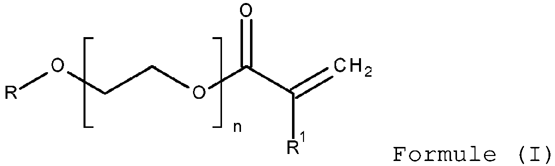 où
R est un hydrogène ou un C1-C20-alkyle ramifié ou non ramifié, de préférence le méthyle, l'éthyle, le butyle ou l'éthylhexyle,
n est 2 à 5 et
R1 est un hydrogène ou CH3-.

13. Courroie de transmission de puissance selon l'une quelconque des revendications 1 et 2, **caractérisée en ce qu'**elle est une courroie de transmission de puissance crantée.

14. Ensemble comprenant une courroie de transmission de puissance selon l'une quelconque des revendications 1 à 13 et de l'huile lubrifiant le moteur et en contact continu avec la courroie de transmission de puissance pendant l'utilisation de la courroie de transmission de puissance.

15. Utilisation d'une courroie de transmission de puissance selon l'une quelconque des revendications 1 à 14 dans un système dans lequel ladite courroie de transmission de puissance est en contact direct avec de l'huile ou partiellement immergée dans de l'huile.
